# EUROPEAN PATENT APPLICATION

(11) **EP 3 376 314 A1**
(43) Date of publication of application: **19.09.2018**
(21) Application number: 17425031.6
(22) Date of filing: 14.03.2017
(51) Int. Cl.: G05B 19/042, G06F 9/50

(54) **MODULARIZED LOGIC**

(71) Applicant: Ge Avio S.r.l., Rivalta di Torino (IT)
(72) Inventor: LAI, Cristian, 70126 Bari (IT)
(74) Representative: Williams, Andrew Richard

(57) **Abstract**

One example aspect of the present disclosure is directed to a method for implementing modularized logic. The method includes accessing, by one or more processors, control software implemented on a controller to control operation of an aircraft engine. The method includes accessing, by the one or more processors, at least one of a plurality of propeller configuration parameters. The method includes modifying, by the one or more processors, the accessed at least one of the propeller configuration parameters independently of the control software.

## Description

### FIELD

The present subject matter relates generally to aerial vehicles.

### BACKGROUND

An aerial vehicle can include one or more engines. The one or more engines can include a full authority digital engine control (FADEC). Each FADEC can include control software to control operation of a corresponding engine. The control software can require certification each time the control software is modified. Some portions of the control software, such as propeller configuration parameters, for example, can require modification more frequently or at a different time than other portions of the control software.

### BRIEF DESCRIPTION

Aspects and advantages of embodiments of the present disclosure will be set forth in part in the following description, or may be learned from the description, or may be learned through practice of the embodiments.

One example aspect of the present disclosure is directed to a method for implementing modularized logic. The method includes accessing, by one or more processors, control software implemented on a controller to control operation of an aircraft engine. The method includes accessing, by the one or more processors, at least one of a plurality of propeller configuration parameters. The method includes modifying, by the one or more processors, the accessed at least one of the propeller configuration parameters independently of the control software.

Another example aspect of the present disclosure is directed to a system for implementing modularized logic. The system includes an aircraft engine including a controller configured to control the engine. The controller includes control software. The system includes one or more memory devices. The one or more memory devices include a propeller configuration parameter set. The propeller configuration parameter set is segregated from the control software so that at least one of the propeller configuration parameters is modifiable independently of the control software.

Another example aspect of the present disclosure is directed to an aircraft. The aircraft includes an aircraft engine including a full authority digital engine control (FADEC). The FADEC includes control software. The aircraft includes one or more memory devices. The one or more memory devices include a propeller configuration parameter set. The propeller configuration parameter set is segregated from the control software so that at least one of the propeller configuration parameters is modifiable independently of the control software.

Other example aspects of the present disclosure are directed to systems, methods, aerial vehicles, avionics systems, devices, non-transitory computer-readable media for implementing modularized logic. Variations and modifications can be made to these example aspects of the present disclosure.

These and other features, aspects and advantages of various embodiments will become better understood with reference to the following description and appended claims. The accompanying drawings, which are incorporated in and constitute a part of this specification, illustrate embodiments of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts an aerial vehicle according to example embodiments of the present disclosure;
FIG. 2 depicts block diagrams of an example system with modularized logic;
FIG. 3 depicts block diagrams of another example system with modularized logic;
FIG. 4 depicts a flow diagram of an example method according to example embodiments of the present disclosure; and
FIG. 5 depicts a control system for implementing one or more aspects according to example embodiments of the present disclosure.

### DETAILED DESCRIPTION

Reference now will be made in detail to embodiments, one or more examples of which are illustrated in the drawings. Each example is provided by way of explanation of the embodiments, not limitation of the embodiments. In fact, it will be apparent to those skilled in the art that various modifications and variations can be made in the present disclosure without departing from the scope or spirit of the invention. For instance, features illustrated or described as part of one embodiment can be used with another embodiment to yield a still further embodiment. Thus, it is intended that the present disclosure covers such modifications and variations as come within the scope of the appended claims and their equivalents.

As used in the specification and the appended claims, the singular forms "a," "an," and "the" include plural referents unless the context clearly dictates otherwise. The use of the term "about" in conjunction with a numerical value refers to within 25% of the stated amount.

Example aspects of the present disclosure are directed to methods and systems that can implement modularized logic. An aerial vehicle can include one or more engines. Each of the one or more engines can include a full authority digital engine control (FADEC). Each FADEC can include control software to control operation of a corresponding engine. The control software can require certification each time the control software is modified.

Some portions of the control software, such as propeller configuration parameters, for example, can require modification more frequently or at a different time than other portions of the control software. Those portions of the control software can be separated from the control software into modularized logic. The modularized logic can reside, for example, in a configuration file. For example, propeller configuration parameters can reside in a propeller configuration file. The control software can be certified separately from the modularized logic, like, for example, the propeller configuration file.

When the modularized logic is integrated with the control software, a series of checks can be used to ensure the modularized logic is legitimate. The series of checks can include, for example, a checksum check, a file structure check, a field format check, a field range check, a field appropriateness check, etc. For example, a checksum check can ensure that bits of the modularized logic reduced to an expected checksum using a checksum formula; a field structure check can ensure that the modularized logic has a correct number of sections, each section is a correct length, etc.; a field structure check can ensure that each field in the modularized logic has an expected format; a field range check can ensure that each field is at or above a minimum threshold and/or at or above a maximum threshold; and a field appropriateness check can ensure that a value of each field is appropriate in light of values of other fields.

In this way, the systems and methods according to example aspects of the present disclosure can have a number of technical effects and benefits. For instance, example aspects of the present disclosure can have a technical effect of enabling modification of modularized logic, such as the propeller configuration file, without requiring certification of the control software.

In some embodiments, the systems and methods of the present disclosure also provide an improvement to a computing system in an aircraft. For instance, the methods and systems implement modularized logic. The method includes accessing, by one or more processors, control software implemented on a controller to control operation of an aircraft engine. The method includes accessing, by the one or more processors, at least one of a plurality of propeller configuration parameters. The method includes modifying, by the one or more processors, the accessed at least one of the propeller configuration parameters independently of the control software. This can allow modification of the modularized logic separately from the control software. Therefore, an aircraft component associated with the modularized logic can be incorporated into the aircraft and the associated modularized logic can be separately certified prior to integration with the control software, eliminating a need to certify (or recertify) the entire control software.

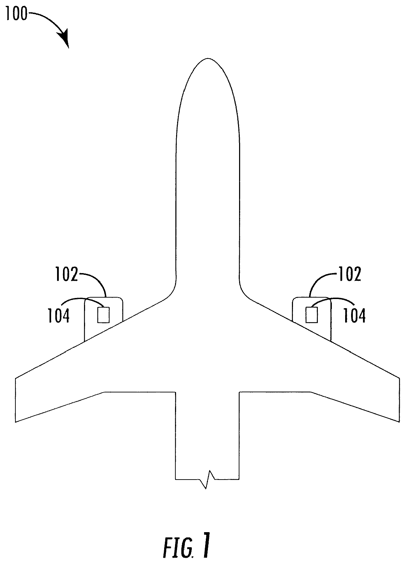

FIG. 1 depicts an example aerial vehicle 100 in accordance with example embodiments of the present disclosure. The aerial vehicle 100 can include one or more engines 102. Each engine 102 can include a full authority digital engine control (FADEC) 104. The numbers, locations, and/or orientations of the components of example aerial vehicle 100 are for purposes of illustration and discussion and are not intended to be limiting. Those of ordinary skill in the art, using the disclosures provided herein, shall understand that the numbers, locations, and/or orientations of the components of the aerial vehicle 100 can be adjusted without deviating from the scope of the present disclosure.

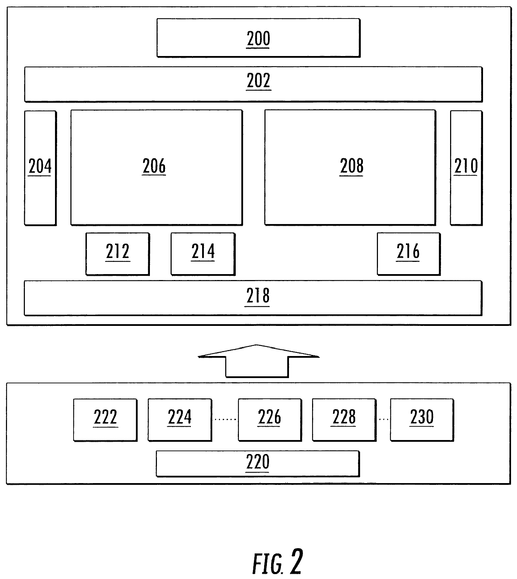

FIG. 2 depicts block diagrams of an example system with modularized logic. Block diagram 200 can depict an example architecture of control software for a FADEC 104 of FIG. 1. The control software can include operating software 202. The operating software 202 can include an operating system. The control software can include an input interface 204. The input interface 204 can allow the control software to receive input. The control software can include one or more control algorithms 206. The one or more control algorithms 206 can include algorithms for ensuring system configurations and/or system settings are within a predetermined range. For example, the predetermined range can be set for safety concerns, government regulatory compliance concerns, component capability concerns, etc. The control software can include management logic 208. The management logic 208 can include data and/or algorithms for component health, component selection, maintenance, etc. The control software can include an output interface 210. The output interface 210 can allow the control software to transmit output.

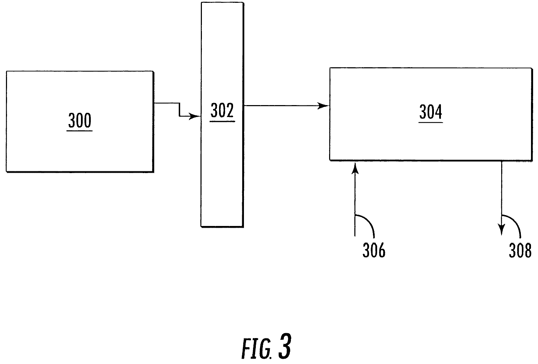

Block diagram 220 can depict an example modularized logic, such as a propeller configuration file, a gearbox configuration file, a configuration file for any engine component, etc. The modularized logic can include one or more parameters 222, 224, 226, 228, 230. For example, when the modularized logic is a propeller configuration file with propeller parameters, a parameter 222, 224, 226, 228, 230 can be, for example, a propeller parameter, such as maximum acceptable gain, minimum acceptable gain, pitch of the propeller, maximum propeller speed, minimum propeller speed, etc. The control software can include design protections logic 218. The design protections logic 218 can include Design Assurance Level A (DAL A) protections logic. The design protections logic 218 can perform one or more checks to validate the modularized logic and/or the one or more parameters 222, 224, 226, 228, 230. The one or more checks will be described in greater detail in reference to FIG. 3 below. If the modularized logic and/or the one or more parameters 222, 224, 226, 228, 230 pass the one or more checks, the modularized logic and/or the one or more parameters 222, 224, 226, 228, 230 can be integrated into the control software. Integrating the modularized logic and/or the one or more parameters 222, 224, 226, 228, 230 into the control software can include compiling the modularized logic into a code and placing the code into the control software, copying values from the one or more parameters 222, 224, 226, 228, 230 into predetermined memory locations accessible by the control software, etc. The modularized logic and/or the one or more parameters 222, 224, 226, 228, 230 can be encrypted for decryption by the control software.

The control system can include one or more static parameters 212, 214, 216 related to the modularized logic. Although the one or more static parameters 212, 214, 216 are related to the modularized logic, the one or more static parameters 212, 214, 216 are not updated when the modularized logic and/or the one or more parameters 222, 224, 226, 228, 230 are integrated with the control software. The one or more static parameters 212, 214, 216 can be parameters that overlap with components other than a component associated with the modularized logic. For example, when the modularized logic is a propeller configuration file with propeller parameters, a static parameter 212, 214, 216 can be, for example, a propeller parameter that affects a fuel loop.

FIG. 3 depicts block diagrams of another example system with modularized logic. Memory block 300 can represent memory that stored the modularized logic. The modularized logic can be passed from the memory block 300 to the design protection 302. The design protection 302 can include Design Assurance Level A (DAL A) protection. The design protection 302 can perform a series of checks on the modularized logic. The series of checks can include, for example, a checksum check, a file structure check, a field format check, a field range check, a field appropriateness check, etc. For example, a checksum check can ensure that bits of the modularized logic reduced to an expected checksum using a checksum formula. A field structure check can ensure that the modularized logic has a correct number of sections, each section is a correct length, etc. A field structure check can ensure that each field in the modularized logic has an expected format. A field range check can ensure that each field is at or above a minimum threshold and/or at or above a maximum threshold. A field appropriateness check can ensure that a value of each field is appropriate in light of values of other fields.

If the modularized logic passes all of the checks, then the design protection 302 can pass the modularized logic on to the control software 304 for integration. The control software 304 can receive input data 306, such as data from a sensor. The control software 304 can use the input data 306 and the integrated modularized logic to determine an action for a component. For example, when the modularized logic is related to a propeller, the control software 304 can use the input data 306 and the integrated modularized logic to determine an action for the propeller. As another example, when the modularized logic is related to a gearbox, the control software 304 can use the input data 306 and the integrated modularized logic to determine an action for the gearbox. The control software 304 can transmit output data 308, such as data used to perform the determined action (actuation data).

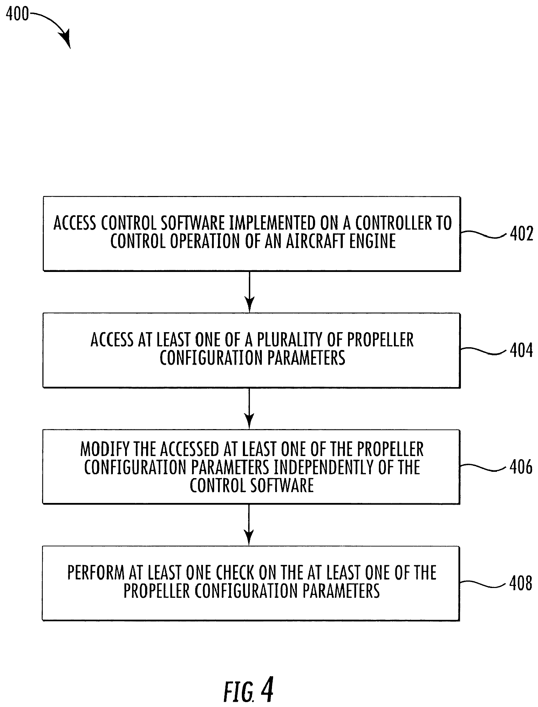

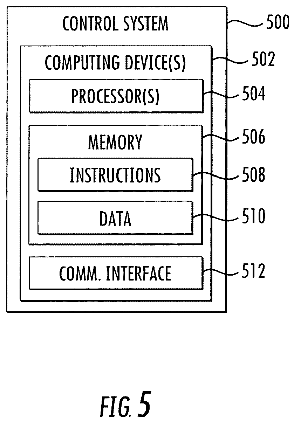

FIG. 4 depicts a flow diagram of an example method 400 for implementing modularized logic. The method of FIG. 4 can be implemented using, for instance, the control system 500 of FIG. 5 and/or the FADEC 104 of FIG. 1. FIG. 4 depicts steps performed in a particular order for purposes of illustration and discussion. Those of ordinary skill in the art, using the disclosures provided herein, will understand that various steps of any of the methods disclosed herein can be adapted, modified, rearranged, or modified in various ways without deviating from the scope of the present disclosure.

At (402), control software implemented on a controller to control operation of an aircraft engine can be accessed. For instance, the control system 500 can access control software implemented on a controller to control operation of an aircraft engine. In an embodiment, the controller can be a FADEC. The control software can include at least one static propeller configuration parameter. At (404), at least one of a plurality of propeller configuration parameters can be accessed. For instance, the control system 500 can access at least one of a plurality of propeller configuration parameters. At least one of the propeller configuration parameters can be related to a maximum acceptable gain. At least one of the propeller configuration parameters can be related to a minimum acceptable gain. At least one of the propeller configuration parameters can be related to a pitch of the propeller. At least one of the propeller configuration parameters can be related to a maximum propeller speed. At least one of the propeller configuration parameters can be related to a minimum propeller speed.

At (406), the accessed at least one of the propeller configuration parameters can be modified independently of the control software. For instance, the control system 500 can modify the accessed at least one of the propeller configuration parameters independently of the control software. At (408), at least one check can be performed on the at least one of the propeller configuration parameters. For instance, the control system 500 can perform at least one check on the at least one of the propeller configuration parameters. At least one of the at least one checks can include a checksum check. At least one of the at least one checks can include a file structure check. At least one of the at least one checks can include a field format check. At least one of the at least one checks can include a field range check. At least one of the at least one checks can include a field appropriateness check.

FIG. 5 depicts a block diagram of an example control system 500 that can be used to implement methods and systems according to example embodiments of the present disclosure. Each FADEC 104 of FIG. 1 can include a control system 500, can be a control system 500, and/or can be in communication with a control system 500. As shown, the control system 500 can include one or more computing device(s) 502. The one or more computing device(s) 502 can include one or more processor(s) 504 and one or more memory device(s) 506. The one or more processor(s) 504 can include any suitable processing device, such as a microprocessor, microcontroller, integrated circuit, logic device, or other suitable processing device. The one or more memory device(s) 506 can include one or more computer-readable media, including, but not limited to, non-transitory computer-readable media, RAM, ROM, hard drives, flash drives, or other memory devices.

The one or more memory device(s) 506 can store information accessible by the one or more processor(s) 504, including computer-readable instructions 508 that can be executed by the one or more processor(s) 504. The instructions 508 can be any set of instructions that when executed by the one or more processor(s) 504, cause the one or more processor(s) 504 to perform operations. The instructions 508 can be software written in any suitable programming language or can be implemented in hardware. In some embodiments, the instructions 508 can be executed by the one or more processor(s) 504 to cause the one or more processor(s) 504 to perform operations, such as the operations for implementing modularized logic, as described with reference to FIG. 4.

The memory device(s) 506 can further store data 510 that can be accessed by the processors 504. For example, the data 510 can include any data used for implementing modularized logic, as described herein. The data 510 can include one or more table(s), function(s), algorithm(s), model(s), equation(s), etc. for implementing modularized logic according to example embodiments of the present disclosure.

The one or more computing device(s) 502 can also include a communication interface 512 used to communicate, for example, with the other components of system. The communication interface 512 can include any suitable components for interfacing with one or more network(s), including for example, transmitters, receivers, ports, controllers, antennas, or other suitable components.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method for implementing modularized logic comprising:
accessing, by one or more processors, control software implemented on a controller to control operation of an aircraft engine;
accessing, by the one or more processors, at least one of a plurality of propeller configuration parameters; and
modifying, by the one or more processors, the accessed at least one of the propeller configuration parameters independently of the control software.

2. The method of claim 1, wherein at least one of the propeller configuration parameters is related to a maximum acceptable gain.

3. The method of claim 1, wherein at least one of the propeller configuration parameters is related to a minimum acceptable gain.

4. The method of claim 1, wherein at least one of the propeller configuration parameters is related to a pitch of the propeller.

5. The method of claim 1, wherein at least one of the propeller configuration parameters is related to a maximum propeller speed.

6. The method of claim 1, wherein at least one of the propeller configuration parameters is related to a minimum propeller speed.

7. The method of claim 1, further comprising performing at least one check on the at least one of the propeller configuration parameters.

8. The method of claim 7, wherein at least one of the at least one checks comprises a checksum check.

9. The method of claim 8, wherein at least one of the at least one checks comprises a file structure check.

10. The method of claim 9, wherein at least one of the at least one checks comprises a field format check.

11. The method of claim 10, wherein at least one of the at least one checks comprises a field range check.

12. The method of claim 11, wherein at least one of the at least one checks comprises a field appropriateness check.

13. The method of claim 1, wherein the control software comprises at least one static propeller configuration parameter.

14. A system for implementing modularized logic comprising:
an aircraft engine comprising a controller configured to control the engine, wherein the controller comprises control software; and
one or more memory devices, wherein the one or more memory devices comprise a propeller configuration parameter set, and wherein the propeller configuration parameter set is segregated from the control software so that at least one of the propeller configuration parameters is modifiable independently of the control software.

15. The system of claim 14, wherein at least one of the propeller configuration parameters is related to a maximum acceptable gain.

16. The system of claim 14, wherein at least one of the propeller configuration parameters is related to a minimum acceptable gain.

17. The system of claim 14, wherein at least one of the propeller configuration parameters is related to a pitch of the propeller.

18. The system of claim 14, wherein at least one of the propeller configuration parameters is related to a maximum propeller speed.

19. The system of claim 14, wherein at least one of the propeller configuration parameters is related to a minimum propeller speed.

20. An aircraft comprising:
an aircraft engine comprising a full authority digital engine control (FADEC), wherein the FADEC comprises control software; and
one or more memory devices, wherein the one or more memory devices comprise a propeller configuration parameter set, and wherein the propeller configuration parameter set is segregated from the control software so that at least one of the propeller configuration parameters is modifiable independently of the control software.
